# EUROPEAN PATENT SPECIFICATION

(11) **EP 2 366 843 B1**
(45) Date of publication and mention of the grant of the patent: **29.10.2014**
(21) Application number: 11158271.4
(22) Date of filing: 15.03.2011
(51) Int. Cl.: E04D 3/36, E04D 5/14, E04F 13/08

(54) **Device for fastening insulating material**
Vorrichtung zum Befestigen von Dämmstoff
Dispositif pour fixer du matériau d'isolation

(30) Priority: 16.03.2010 NL 2004410
(43) Date of publication of application: 21.09.2011
(73) Proprietor: SFS intec Holding AG, 9435 Heerbrugg (CH)
(72) Inventor: Van Voorden, Arie, 5421, VA Gemert (NL)

(56) References cited:
- EP-A2- 1 182 361
- WO-A1-90/15206
- WO-A1-91/01420
- DE-U1- 9 410 723

## Description

The invention relates to a fastening device according to the preamble of independent claim 1 and to a roofing construction according to claim 9.

Such fastening devices are used to fasten insulation material, in particular thick slabs or plates of e.g. mineral wool, onto a support, in particular roofing.

The document EP 1 117 882 discloses a fastener comprising an elongate, flanged sleeve and a screw which threadably engages the tip of the sleeve to allow post-tensioning of the insulating material.

A problem associated with this fastener is that when the layer of insulating material is compressed, e.g. by snow or traffic on a roof, the fastener cannot follow the compressive movement, so that a roofing membrane that is placed on top of the insulating material may become punctured by the flange.

A fastening device of the kind initially referred to is known from the document WO 91/01420 A1. The shaft of the fastener has a screw head on the one hand and a screw threaded first part on the other end. The screw threaded first part can be screwed into a support of metal or wood. The second part of the shank below the screw head comprises a series of angular grooves which are selectively engaged by a locking intermediate element to adjust the effective length of the assembly of the fastener and the intermediate element. The adjustment may be used to adjust the compressive force that is exerted by a flange of the fastening device onto a sheet covering a layer of insulating material in a so called post-tensioning operation. The end opposite to the screw head of the shaft is constructed as a stud fastener having an angulated part for fixing the fastener in a hole in the support having substantially the same diameter as the shank at this end. The fastener is inserted into the hole by means of a hammer.

The document WO 90/15206 A1 discloses a fastening device which is very similar to the afore-mentioned fastening device. The shank thereof comprises a screw threaded part instead of said series of angular grooves. The locking intermediate element is replaced with a nut screwably received on the screw threaded part of the shank. Again the part of the shank on the other end thereof is constructed as a stud which does not comprise any thread.

The mounting of both aforementioned fastening devices is complicate in so far that at first the fastener is to be fixed in a hole of the support by means of a hammer. Thereafter the fastener is not visible within the support. The sleeve of the fastening device has to find the upper end of the fastener and is to be fixed thereon for adjusting the length of the fastening device without any visible control thereof.

The invention aims to provide a fastening device that allows for post-tensioning, but in which the above mounting problem is alleviated.

The aim is achieved according to the invention by a fastening device having the features defined in the characterizing part of independent claim 1. Further embodiments of the invention are defined in the dependent claims.

By providing an intermediate element on the screw that is axially slidably yet rotationally fixedly held in a wide portion of inner passage of the sleeve while a portion of the shank of the screw extends axially slidably through a connecting narrower portion of the inner passage, the fastening device can retain its post-tensioning capabilities and yet can allow an axial movement so that the fastening device can follow compression of the layer of insulating material as with the fastening device according to the above-mentioned document WO 90/15206 A1.

The fastener of the fastening device according to the invention is a screw fastener instead of a stud fastener. According to the invention the fastener is a screw having one and the same screw thread extending between the head and the tip of the shank of the fastener. The intermediate element is a nut screwably received on said screw thread and the shank wherein said thread is screwably receivable in a support, preferably in a bore hole of the support. Along its length the screw thread of the shank has the same pitch between the head and the tip of the shank. Therefore, to mount the fastening device according to the invention to the support the sleeve with the screw and the nut screwably received thereon is inserted into a layer of insulating material until the flange of the sleeve rests on the layer of insulating material. When the fastener is rotated, the fastener is screwed into the bore hole in the support without change of the distance between the support and the flange since the thread engaging into the bore hole and into the nut has the same pitch within the nut as within the bore hole. Contrary thereto with the fastening devices according to the above-mentioned documents WO 91/01420 A1 and WO 90/15206 A1 the threaded end of the stud fastener or the none-threaded end of the stud fastener, respectively, is to be inserted into the support before the sleeve can be set onto the none-threaded part of the stud fastener. For setting the fastener itself it has to be hammered into the bore hole of the support before the sleeve can be mounted.

With the fastening device according to the above-mentioned document EP 1 117 882 B1 the screw has one and the same screw thread extending from the screw head to the tip of the shaft, but in a region engaging the support the screw has a different thread pitch so that the distance between the sleeve and the support is changed when the sleeve is adjusted by rotation of this screw since the screw is in threaded engagement with the sleeve in a region adjacent to the screw head.

The invention shall be explained further using an exemplary embodiment that is shown in a drawing. In the drawing:
Fig. 1 shows a schematical side view in partial cross-section of a fastening device ready for use;
Fig. 2 shows the fastening device of Fig. 1 during use;
Fig. 3 shows the fastening device of Fig. 1 in partially disassembled condition;
Fig. 4 shows a schematical top view of the sleeve of the fastening device of Fig. 3;
Fig. 5-8 show schematical cross-sections of consecutive steps of fastening insulating material onto a support using a fastener according to Figures 1-4, and
Fig. 9 shows the fastening device following compression of a layer of insulating material in a telescopic movement.

The figures are schematical representations of the invention, and are provided as a non-limiting, exemplary embodiment.

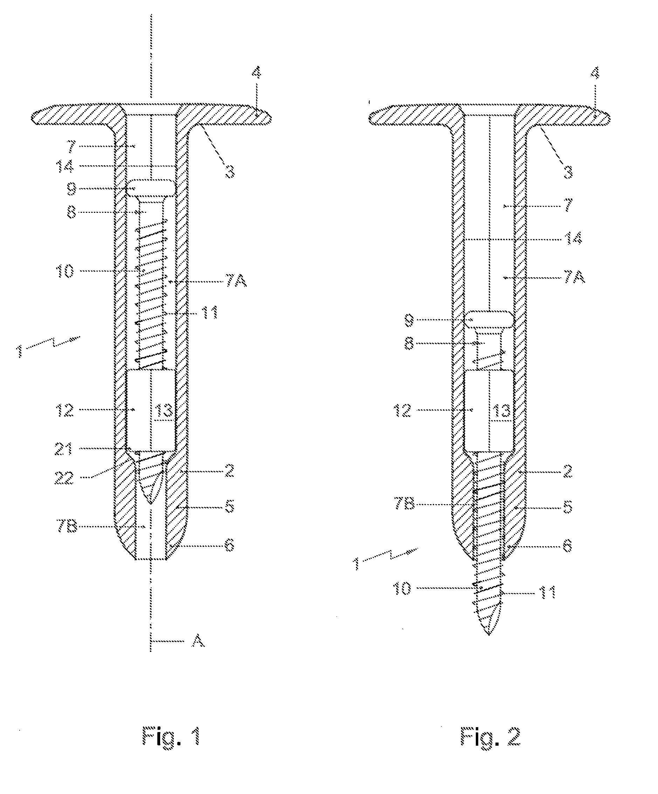

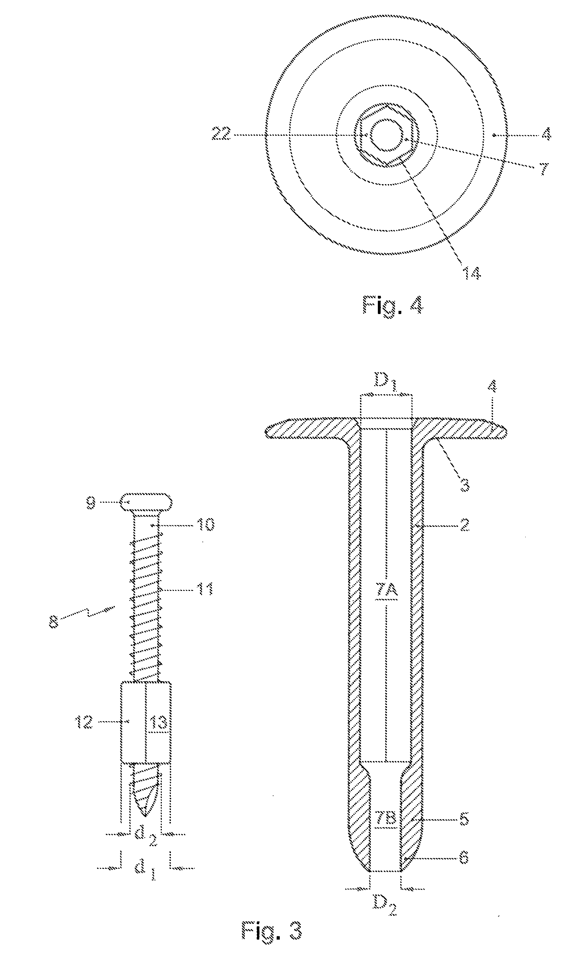

Figures 1-4 show a fastening device 1. The fastening device 1 comprises a elongate sleeve 2. The sleeve 2 is at a first end 3 provided with a radially extending flange 4, and is provided at a second end 5 with a tip 6. The tip 6 may have a reduced diameter with respect to the body of the sleeve 2 to facilitate insertion into a hole, while the flange may have an increased diameter relative to the body of the sleeve 2 to engage with material surrounding a hole into which the sleeve 2 is inserted.

The sleeve 2 is provided with a passage 7 that axially extends through the sleeve 2 along its geometrical axis A. The passage 7 extends along the axis A of the sleeve 2 from the first end 3 to the second end 5. The passage 7 comprises a first portion 7a that extends from the first end 3 towards the tip 6. The first portion 7a of the passage 7 continues to a second portion 7b of reduced diameter that extends through the tip 6 to the second end 5 of the sleeve 2. The first portion 7a and the second portion 7b are contiguous. The first portion of the passage 7a has a diameter D1, and the second portion 7b has a diameter D2.

The fastening device 1 further comprises a screw 8. The screw 8 has a head 9 and a shank 10 extending from the head 9. The shank 10 is provided with a screw thread 11. The shank 10 has a diameter d2 less than the diameter D2 of the second portion 7b of the passage 7 of the sleeve 2. The diameter d2 of the shank 10 includes the screw thread 11 in case of outer thread, and is chosen such that the shank 7 including the thread 11 may pass through the second portion 7b of the passage 7 without engagement. The screw 8 may be a conventional screw, and may have a conventional head 9 including e.g. a Torx or Allen drive.

The fastening device 1 further comprises an intermediate element 12. The intermediate element is screwably received on the screw thread 11 of the screw 8. The intermediate element 12 has a diameter d1 that is larger than the diameter D2 of the second portion 7b of the passage 7 of the sleeve 2. The diameter d1 is, however, smaller than the diameter D1 of the first portion 7a of the passage 7 of the sleeve 2. The screw 8 and the intermediate element 12 screwed thereon are as an assembly receivable in the passage 7 of sleeve 2. The intermediate element 12 is then axially slidably, yet rotationally fixedly held in the first portion 7a of the passage 7 of the sleeve 2, while a portion of the shank 10 of the screw 8 axially slidably and rotationally freely extends through the second portion 7b of the passage 7. By providing an intermediate element 12 on the screw 8 that is axially slidably yet rotationally fixedly held in a wide portion 7a of the inner passage 7 of the sleeve 2, while a portion of the shank 10 of the screw 8 extends axially slidably and rotationally free through a connecting narrower portion 7b of the inner passage 7, the fastening device both has post-tensioning capabilities and allows for telescopic compressive movement as shall be explained further below.

The intermediate element 12 is rotationally fixedly held in the first portion 7a of the passage 7 of the sleeve 2 in a configuration in which the circumference 13 of the intermediate element 12 engages with the inner walls 14 of the sleeve 2 at the first portion 7a of the passage 2 in form closure. For example, the intermediate element 12 may be embodied as a hexagonal nut, and the inner walls 14 of the first portion 7a of the passage 7 may be provided with a corresponding hexagonal cross-section, which preferably is a constant cross-section. The intermediate element 12 may also be axially slidably yet rotationally fixedly held in the first portion 7a of the passage 7 of the sleeve 2 in other ways. For example, the intermediate element 12 may be embodied as a notched bead or as an eccentric washer that cooperates with one or more ridges that are provided on the inner walls 14 of the sleeve 2. Advantageously, such a polygonal cross-section may allow the first end 3 of the sleeve 2 to be engaged to rotate jointly with the intermediate element 12 relative to the screw 8 to allow axial adjustment of the fastening device 1 as shall be discussed below.

In the embodiment shown, the flange 4 is integrally formed with the sleeve 2, and may advantageously be formed from a plastics material by injection-moulding. However, the flange 4 may also be provided as a separate component, e.g. as a washer that cooperates with a radial edge at the first end 3 of the sleeve 2. The sleeve 2 may also be made from another material, e.g. from sheet metal in a deep drawing process.

The intermediate element 12 may be made of metal so that relatively high forces may be transmitted via the intermediate element 12 from the sleeve 2 to the screw 8 and vice versa. However, the intermediate element 12 may also be (partially) made of e.g. a plastics material. The screw 8 is preferably made of metal, but may as an alternative be e.g. made of a plastics material.

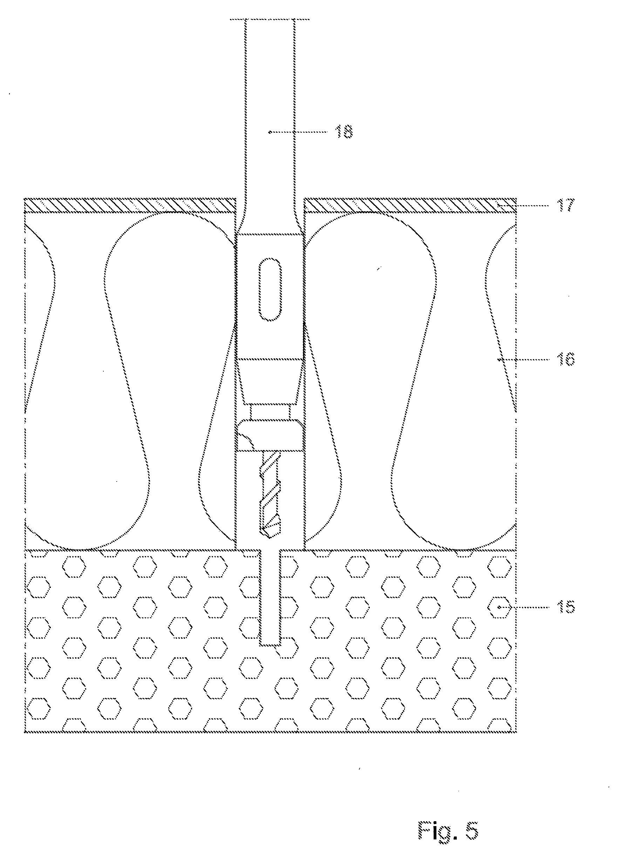

Referring to Figures 5-9 it shall be discussed how the fastening device of Figures 1-4 may be used to fasten insulating material, in particular a slab of mineral wool onto a support, in particular roofing.

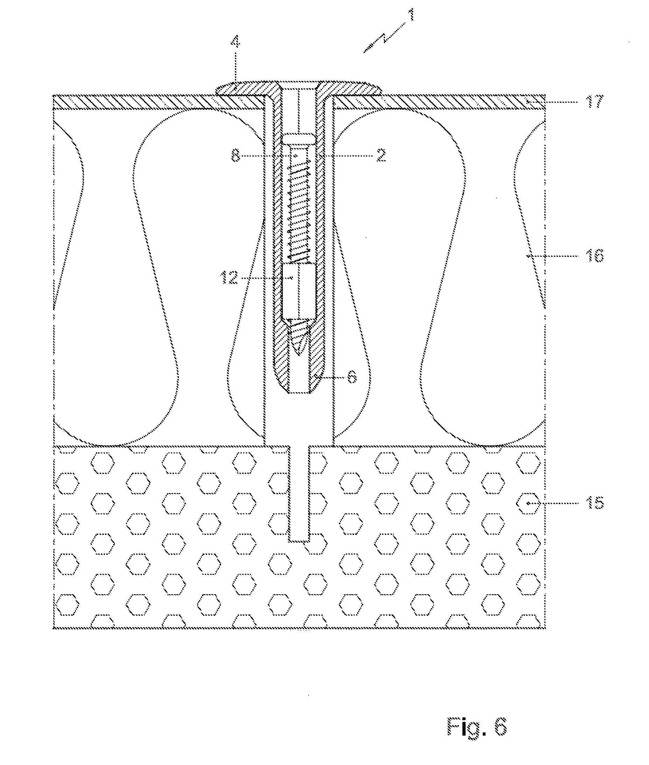

Fig. 5 shows a support 15, in particular a roofing beam, onto which a layer 16 of insulating material, in particular a slab of mineral wool has been laid. On top of the layer 16 of insulating material, a roofing membrane 17 has been placed, in particular a bituminous or polymeric sheet. Using a compound drill 18, a hole 19 has been drilled through the membrane 17 and the layer 16 of insulating material into beam 15. In Fig. 5 it is shown how the drill 18 is retracted. In Fig. 6 it is shown how the fastening device 1 assembled and ready to use has been inserted into the hole 19 until the flange 4 is supported by the membrane 17 surrounding the hole 19.

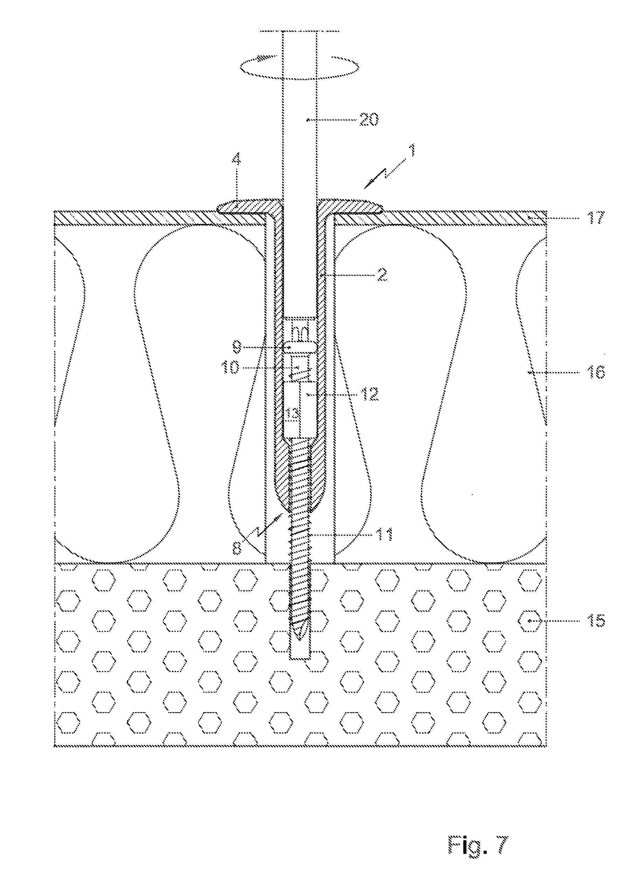

In Fig. 7 it is shown how the head 9 of the screw 8 is engaged by a screw driver 20. The screw driver is used to exert an axial load on the sheet 17 and the layer 16 of insulating material, via the flange 4, so that the sheet 17 and the layer 16 may be compressed and a certain amount of pretension can be applied. In addition, the screw 8 is driven to rotate about its axis relative to the intermediate element 12 and the sleeve 2. The sleeve 2 is kept from rotating about its axis A by the friction that occurs between the flange 4 and the sheet 17. In case the screw thread 11 cooperates with pre-existing screw thread in the intermediate element 12, e.g. when the intermediate element is a nut, only little friction is needed and the axial force to be excerted on the screw may be chosen independently of the need to keep the sleeve 2 from rotating about its axis A while screwing.

The intermediate element 12 is kept from rotating about its axis by its circumference B that engages the inner walls 14 of the first portion 7a of the inner passage 7 of the sleeve 2, here in form closure. The screw thread 11 on the shank 10 of the screw 9 that engages with the intermediate element 12 causes the screw 8 to advance axially outward through the second portion 7b of the tip 6 of the sleeve 2 and into the beam 15. The shank 10 including its screw thread 11 has a diameter d2 that is smaller than the diameter D2 of the second portion 7b of the passage 7, so that the shank 10 of the screw 8 can pass freely through the second passage 7b. Screwing the screw 8 into the beam 15 is continued until the screw has reached its target depth, e.g. about 2 cm. In practise, screwing to the targeted depth may be achieved by setting a torsion clutch on the screw driver at a predetermined value.

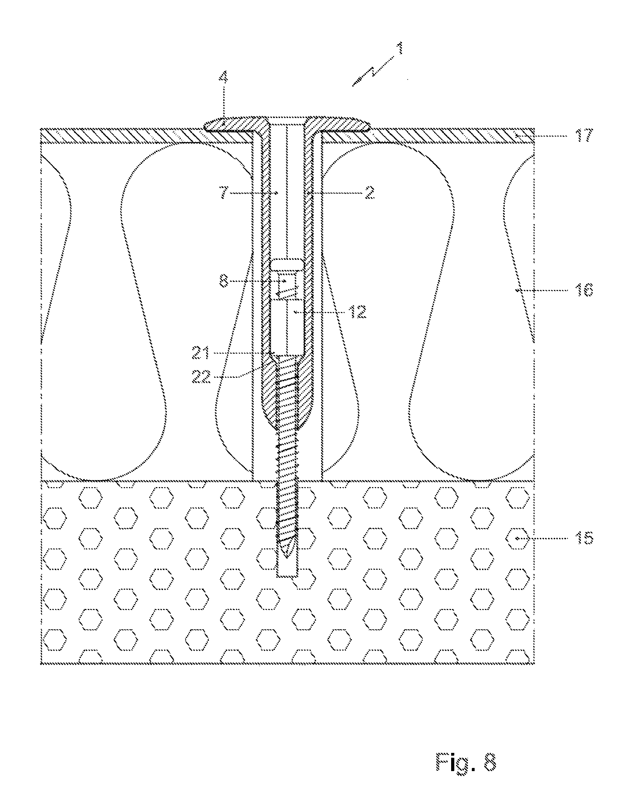

When the flange 4 starts to compress the sheet 17 and the insulating material 16, the screw driver is retracted, leaving the fastening device 1 in a working position as shown in Fig. 8.

In this configuration, the bottom part 21 of the intermediate element 12 cooperates with the bottom part 22 of the first portion 7a of the passage 2 where it continues in the second portion 7b of reduced diameter. Here, the axial reaction force exerted by the compressed layer of mineral wool 16 onto the flange 4 of the sleeve 2 of the fastening device 1 is transferred onto the intermediate element 12. From the intermediate element 12, the axial force is transferred via the screw thread 11 into the shank 10 of the screw 8 and from the screw 8 via the screw thread 11 into the beam 15. As the intermediate element 12 is rotationally fixedly held in the sleeve 2, the intermediate element is not free to displace axially along the screw thread 11, so that the fastening device 1 can exert a compressive force onto the sheet 17 and the layer of insulating material 15.

Referring to Fig. 8, the axial length of the fastening device 1 may be adjusted by rotating the sleeve 2 jointly with the intermediate element 12 relative to the screw 8. The sleeve 2 may e.g. be engaged to rotate by inserting a hexagonal driver into the first portion 7a of the passage 7 near the first end 3. Such axial adjustment may be used to adjust the compressive force that is exerted by the flange 4 of the fastening device 1 onto the sheet 7 and the layer 16 of insulating material in a so called post-tensioning operation. As the pretension can be set fairly independently with this fastener, such post-tensioning may be not be required less often than in the prior art.

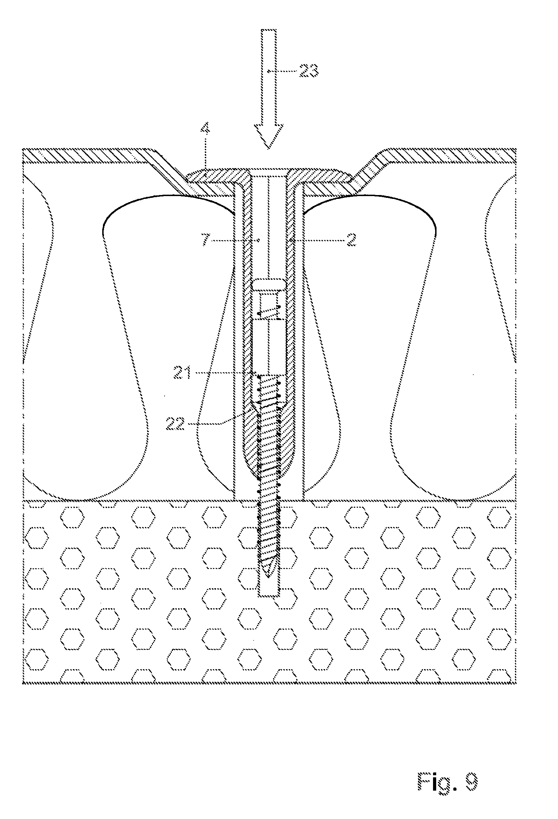

With reference to Fig. 9, it is shown that the fastening device 1 allows telescopic movement of the assembly of the screw 8 and the intermediate element 12 relative to the sleeve 2. When an axial load, shown with arrow 23 is applied onto the fastening device 1, the sleeve 2 may move axially relative to the assembly of the screw 8 and the intermediate element 12. The bottom part 21 of the intermediate element 12 may then move away from the bottom part 22 of the second portion 7b of the passage 7 in an inward telescopic movement. This may in practice occur when the layer 16 of insulating material is compressed by a snow load or roof traffic. After removal of the load 23, the resiliency of the layer 16 of insulating material causes the layer d to return to its original shape, thereby driving an outward reverse telescopic movement in which the fastening device 1 expands axially until the bottom part 21 of the intermediate element is again in contact with a bottom part 22 of the first portion 7a of the passage 7. The inward telescopic movement allows the fastening device 1 to follow compressive movement of the insulating layer 16, so that it may be prevented that it sticks out. Such sticking out could cause damage to a portion of the roofing membrane that covers the flange 4 (not shown), or to the fastening device itself.

It shall be clear to the skilled person that the invention is not limited to the exemplary embodiment described herein, and that many variations are possible within the scope of the appended claims.

## Claims

1. A fastening device (1), comprising:
- an elongate sleeve (2) that at a first end (3) is provided with a radially extending flange (4) and that a second end (5) is provided with a tip (6), the sleeve (2) further being provided with a passage (7) that axially extends therethrough, the passage (7) comprising a first portion (7a) that extends from the first end (3) towards the tip (6) and which continues into a second portion (7b) of reduced diameter that extends through the tip (6) to the second end (5),
- a screw (8), having a head (9) and a shank (10) extending therefrom, the shank (10) being provided with a screw thread (11) and having a diameter less than the second portion of the passage (7) of the sleeve (2), and
- an intermediate element (12), receivable on the shank (10) of
the screw (8) and having a diameter larger than the diameter of the second portion (7b) of the passage (7) of the sleeve (2), but smaller than the diameter of the first portion (7a) of the passage (7) of the sleeve, such that the screw (8) and the intermediate element (12) as an assembly are receivable in the passage (7) of the sleeve (2) so that the intermediate element (12) is axially slidably held in the
first portion (7a) of the passage (7) of the sleeve (2), while a portion of the shank (10) axially slidably extends through the second portion (7b) of the passage (7),
**characterised in that**
said screw thread (11) extends on the shank (10) between the head and the tip of the shank (10), that the intermediate element (12) is a nut screwably receivable on said screw thread (11),
and that said nut, when installed with the screw (8) in the first portion (7a) of the passage (7), is rotationally fixedly held in said first portion (7a).

2. The fastening device according to claim 1, wherein the circumference of the intermediate element (12) engages with the inner walls of the sleeve (2) at the first portion (7a) of the passage (7) in form closure.

3. The fastening device according to any of the preceding claims, wherein the inner walls of the sleeve (2) at the first portion (7a) of the passage (7) have a constant polygonal cross-section.

4. The fastening device according to any of the preceding claims, wherein the flange (4) is integrally formed with the sleeve (2).

5. The fastening device according to any of the preceding claims, wherein the intermediate element (12) is made of metal.

6. The fastening device according to any of the preceding claims, wherein the sleeve (2) is made of plastics material.

7. The fastening device according to any of the preceding claims, wherein the screw (8) is made of metal.

8. The fastening device according to any of the preceding claims, where the assembly of the screw (8) and intermediate element (12) is arranged for axial telescopic movement relative to the sleeve (2).

9. A roofing construction, comprising a layer (16) of insulating material that is fastened to a support (15) with one or more fastening devices (1) according to any of the preceding claims.

## Patentansprüche

1. Befestigungsvorrichtung (1), die umfasst:
- eine langgestreckte Hülse (2), die an einem ersten Ende (3) mit einem sich radial erstreckenden Flansch (4) und an einem zweiten Ende (5) mit einer Spitze (6) ausgestattet ist, wobei die Hülse (2) weiter mit einem Durchgang (7), der sich axial durch sie erstreckt, ausgestattet ist, wobei der Durchgang (7) umfasst: einen ersten Teil (7a), der sich von dem ersten Ende (3) bis zur Spitze (6) erstreckt und in einen zweiten Teil (7b) mit verringertem Durchmesser, der sich durch die Spitze (6) zu dem zweiten Ende (5) erstreckt, fortsetzt,
- eine Schraube (8), die einen Kopf (9) und einen Schaft (10), der sich von ihm aus erstreckt, hat, wobei der Schaft (10) mit einem Schraubengewinde (11) ausgestattet ist und über einen Durchmesser verfügt, der kleiner als der zweite Teil des Durchgangs (7) der Hülse (2) ist, und
- ein Zwischenelement (12), das auf dem Schaft (10) der Schraube (8) aufnehmbar ist und über einen Durchmesser verfügt, der größer als der Durchmesser des zweiten Teils (7b) des Durchgangs (7) der Hülse (2), aber kleiner als der Durchmesser des ersten Teils (7a) des Durchgangs (7) der Hülse ist, so dass die Schraube (8) und das Zwischenelement (12) als eine Baugruppe in dem Durchgang (7) der Hülse (2) aufnehmbar sind, so dass das Zwischenelement (12) axial verschiebbar in dem ersten Teil (7a) des Durchgangs (7) der Hülse (2) gehalten wird, während sich ein Teil des Schaftes (10) axial verschiebbar durch den zweiten Teil (7b) des Durchgangs (7) erstreckt,
**dadurch gekennzeichnet,**
**dass** sich das Schraubengewinde (11) auf dem Schaft (10) zwischen dem Kopf und der Spitze des Schaftes (10) erstreckt, dass das Zwischenelement (12) eine Mutter ist, die auf das Schraubengewinde (11) schraubbar ist, und dass die Mutter, wenn sie mit der Schraube (8) in dem ersten Teil (7a) des Durchgangs (7) installiert ist, drehfest in dem ersten Teil (7a) gehalten wird.

2. Befestigungsvorrichtung nach Anspruch 1, wobei der Umfang des Zwischenelementes (12) mit den inneren Wänden der Hülse (2) bei dem ersten Teil (7a) des Durchgangs (7) formschlüssig in Eingriff ist.

3. Befestigungsvorrichtung nach einem der vorangehenden Ansprüche, wobei die inneren Wände der Hülse (2) in dem ersten Teil (7a) des Durchgangs (7) über einen konstanten polygonalen Querschnitt verfügen.

4. Befestigungsvorrichtung nach einem der vorangehenden Ansprüche, wobei der Flansch (4) integral mit der Hülse (2) ausgebildet ist.

5. Befestigungsvorrichtung nach einem der vorangehenden Ansprüche, wobei das Zwischenelement (12) aus Metall gefertigt ist.

6. Befestigungsvorrichtung nach einem der vorangehenden Ansprüche, wobei die Hülse (2) aus einem Kunststoff gefertigt ist.

7. Befestigungsvorrichtung nach einem der vorangehenden Ansprüche, wobei die Schraube (8) aus Metall gefertigt ist.

8. Befestigungsvorrichtung nach einem der vorangehenden Ansprüche, wobei die Baugruppe aus der Schraube (8) und dem Zwischenelement (12) für eine axiale teleskopische Bewegung relativ zu der Hülse (2) ausgebildet ist.

9. Dachkonstruktion, die eine Schicht (16) eines Dämmstoffes umfasst, die mit einer oder mehreren Befestigungsvorrichtungen (1) nach einem der vorangehenden Ansprüche an einem Träger (15) befestigt ist.

## Revendications

1. Dispositif de fixation (1) comprenant :
- un manchon allongé (2) ayant une première extrémité (3) munie d'une bride (4) s'étendant radialement et une seconde extrémité (5) munie d'une pointe (6), le manchon (2) étant en outre muni d'un passage (7) qui le traverse axialement, le passage (7) ayant une première partie (7A) entre la première extrémité (3) vers la pointe (6) et qui se poursuit par une seconde partie (7B) de diamètre réduit qui passe de la pointe (6) à la seconde extrémité (5),
- une vis (8) ayant une tête (9) et un corps (10) partant de la tête, le corps (10) étant muni d'un filetage (11) et ayant un diamètre inférieur à celui de la seconde partie du passage (7) du manchon (2), et
- un élément intermédiaire (12) porté par la tige (10) de la vis (8) et ayant un diamètre supérieur au diamètre de la seconde partie (7B) du passage (7) du manchon (2) et inférieur au diamètre de la première partie (7A) du passage (7) du manchon de façon que la vis (8) et l'élément intermédiaire (12) constituant un ensemble, logé dans le passage (7) du manchon (2) de façon que l'élément intermédiaire (12) puisse y coulisser axialement dans la première partie (7A) du passage (7) du manchon (2) alors qu'une partie de la tige (10) glisse axialement à travers la seconde partie (7B) du passage (7),
dispositif de fixation **caractérisé en ce que**
le filetage (11) s'étend sur la tige (10) entre la tête et la pointe de la tige (10) de façon que l'élément intermédiaire (12) qui est un écrou soit vissé sur le filetage (11) et que cet écrou, lorsqu'installé avec la vis (8) dans la première partie (7A) du passage (7), soit tenu bloqué en rotation dans la première partie (7A).

2. Dispositif de fixation selon la revendication 1,
dans lequel
la périphérie de l'élément intermédiaire (12) coopère avec la paroi intérieure du manchon (2) de la première partie (7A) du passage (7) en forme de fermeture.

3. Dispositif de fixation selon l'une quelconque des revendications précédentes,
dans lequel,
les parois intérieures du manchon (2) de la première partie (7A) du passage (7) ont une section polygonale constante.

4. Dispositif de fixation selon l'une quelconque des revendications précédentes,
dans lequel,
la bride (4) fait corps avec le manchon (2).

5. Dispositif de fixation selon l'une quelconque des revendications précédentes,
dans lequel,
l'élément intermédiaire (12) est en métal.

6. Dispositif de fixation selon l'une quelconque des revendications précédentes,
dans lequel,
le manchon (2) est en matière plastique.

7. Dispositif de fixation selon l'une quelconque des revendications précédentes,
dans lequel,
la vis (8) est en métal.

8. Dispositif de fixation selon l'une quelconque des revendications précédentes,
dans lequel,
l'ensemble formé par la vis (8) et l'élément intermédiaire (12) est installé pour effectuer un mouvement axial télescopique par rapport au manchon (2).

9. Structure de couverture comportant une couche (16) de matière isolante qui est fixée à un support (15) avec un ou plusieurs dispositifs de fixation (1) selon l'une quelconque des revendications précédentes.
